# EUROPÄISCHE PATENTSCHRIFT

(11) **EP 4 331 872 B1**
(45) Veröffentlichungstag und Bekanntmachung des Hinweises auf die Patenterteilung: **08.04.2026**
(21) Anmeldenummer: 23020404.2
(22) Anmeldetag: 29.08.2023
(51) Int. Cl.: B60D 1/01, B60D 1/36, B60R 11/04

(54) **KUPPLUNGSVORRICHTUNG FÜR EIN ZUGFAHRZEUG MIT EINEM DARAN ANGEBRACHTEN OBJEKTERKENNUNGSMITTEL**
COUPLING DEVICE FOR A TOWING VEHICLE, COMPRISING OBJECT DETECTION MEANS ATTACHED THERETO
DISPOSITIF D'ACCOUPLEMENT POUR VÉHICULE TRACTEUR AVEC UN MOYEN DE RECONNAISSANCE D'OBJET FIXÉ À CELUI-CI

(30) Priorität: 31.08.2022 DE 102022003183
(43) Veröffentlichungstag der Anmeldung: 06.03.2024
(73) Patentinhaber: JOST-Werke Deutschland GmbH, 63263 Neu-Isenburg (DE)
(72) Erfinder: Müller, Mark, 60431 Frankfurt am Main (DE); Kaufhold, Benjamin, 37136 Seeburg (DE); Haber, Steffen, 64521 Gross-Gerau (DE); Gitzen, Stephan, 64560 Riedstadt (DE); Schlemm, Anton, 63263 Neu-Isenburg (DE)
(74) Vertreter: Straubel, Dirk

(56) Entgegenhaltungen:
- DE-A1- 102019 008 919
- US-A- 3 697 974
- US-A1- 2014 151 979
- US-A1- 2022 097 783

## Beschreibung

Die Erfindung betrifft eine Kupplungsvorrichtung für ein Zugfahrzeug mit einem daran angebrachten Objekterkennungsmittel gemäß den im Oberbegriff von Anspruch 1 stehenden Merkmalen.

Das Objekterkennungsmittel kann insbesondere eine Kamera sein, mit deren Hilfe dem Fahrer oder der Fahrerin insbesondere während des Ankuppelns eines Anhängerfahrzeugs an das Zugfahrzeug ein Bild des rückwärtigen Verkehrsraumes zusammen mit dem dort abgestellten Anhängerfahrzeug in der Fahrerkabine bereitstellt wird. Unter Zuhilfenahme des Bildes lässt sich das Zugfahrzeug präziser an das Kupplungsmittel des Anhängerfahrzeugs heran manövrieren.

Eine an der Kupplungsplatte einer Sattelkupplung angeordnete Kamera ist beispielsweise in der DE 10 2004 048 139 A1 in Zusammenhang mit einer Sicherheitsvorrichtung für einen Sattelzug bestehend aus einem Zugfahrzeug und einem Auflieger offenbart. Mit Hilfe der Sicherheitsvorrichtung soll bei aufliegendem Auflieger, entriegeltem Königszapfen sowie eingefahrener Stützvorrichtung ein zulässiger Maximalabstand zwischen dem Zugfahrzeug und dem Auflieger überwachbar und/oder haltbar sein. Die Position des an dem Auflieger befindlichen Königszapfens zur Kupplungsplatte kann mittels einer in oder an der Kupplungsplatte angeordneten Kamera feststellbar sein.

Einen anderen Stand der Technik bildet die DE 10 2004 029 130 A1 mit einer möglichst nah an der Fahrzeuglängsachse seitlich, unter oder in der Sattelkupplung angebrachten Kamera. Eine Anbringung der Kamera in oder in der Nähe der Fahrzeuglängsachse hat den Vorteil, dass diese ein weitgehend verzerrungsfreies Bild bereitstellt. Je näher die Kamera jedoch zu der Fahrzeuglängsachse platziert ist desto eher befindet sie sich im Einwirkungsbereich des anhängerfahrzeugseitigen Kupplungsmittels, wie zum Beispiel eines Königszapfens, und ist dadurch einem erhöhten Beschädigungsrisiko ausgesetzt.

Die DE 101 55 056 A1 beschreibt ein Steckkupplungssystem zum Verbinden von Leitungen zwischen zwei Fahrzeugen. Das Steckkupplungssystem umfasst eine im Bereich der Einführöffnung der Kupplungsplatte verfahrbar angeordnete Steckerbuchse, die nach dem Ankuppeln eines Aufliegers durch axiales Verfahren einen komplementär an dem Auflieger bereitgehaltenen Stecker kontaktiert. Das Ein- und Ausfahren der Steckerbuchse erfolgt durch ein entsprechendes Signal eines ebenfalls im Bereich der Einführöffnung ortsfest angeordneten ersten Sensors.

Die DE 10 2007 053 117 A1 befasst sich mit einem Antrieb für einen beweglichen Teil in einem Fahrzeug, wie beispielsweise einer Kamera, die zwischen einer aus dem Fahrzeug herausgefahrenen Ausfahrlage und einer zurückgefahrenen Position innerhalb des Fahrzeugs beweglich gelagert ist. Mit Hilfe der Kamera soll die Fahrbahn des Fahrzeugs aufgenommen werden.

In der EP 3 141 685 A2 ist eine in eine Moduleinheit integrierte Sensoreinrichtung für eine berührungslose Betätigung eines beweglichen Teils eines Kraftfahrzeugs offenbart, wie zum Beispiel einer Heckklappe, Seitentür oder Motorhaube.

Die DE 10 2019 008 918 A1 schlägt eine Sattelkupplung mit einer Kupplungsplatte und einer Kamera vor. Die Kupplungsplatte weist unter andrem zwei Einfahrhörner auf, die eine konisch in rückwärtiger Richtung ausgeformte Einfahröffnung seitlich begrenzen. Die Kamera soll ortsfest an einem von zwei Einfahrhörnern der Kupplungsplatte angeordnet sein.

Eine ortsfeste Anbringung der Kamera an Lagerungselementen der Kupplungsplatte ist der DE 10 2019 008 919 A1 zu entnehmen.

Die US 3 697 974 A offenbart eine Kupplungsvorrichtung gemäß dem Oberbegriff des Anspruchs

Der Erfindung lag daher die Aufgabe zugrunde, ein Objekterkennungsmittel mit geringem Beschädigungsrisiko möglichst nah zu der Längsachse des Zugfahrzeugs anzuordnen.

Die Aufgabe wird erfindungsgemäß mit den Merkmalen des Anspruchs 1 gelöst.

Unter einem Objekterkennungsmittel wird eine Kamera verstanden, welche im nicht-sichtbaren, zum Beispiel im infraroten Bereich, und/oder im sichtbaren Spektrum arbeiten kann. Neben 2D-Bildsensoren sind auch bildgebende Sensoren geeignet, welche 3D-Informationen erfassen können. Hierzu zählen insbesondere Laserscanner, Radarsensoren und Ultraschallsensoren. Das Objekterkennungsmittel kann zum besseren Schutz gegen äußere Einflüsse ein Gehäuse umfassen und vorzugsweise mit diesem eine gemeinsame Baueinheit bilden.

Die von dem Objekterkennungsmittel bereitgestellten Daten können im Fahrerhaus auf einer Anzeigevorrichtung dargestellt werden und dem Fahrer oder der Fahrerin als visuelle Manövrierhilfe zum Ankuppeln des Anhängerfahrzeugs dienen. Es ist jedoch auch möglich, dass die von dem Objekterkennungsmittel bereitgestellten Daten in das elektronische Datensystem des Zugfahrzeugs eingespeist sind und das Zugfahrzeug auf Basis dieser Daten ein autonomes oder semi-autonomes Kuppeln des Anhängerfahrzeugs vornimmt.

Bei einem semi-autonomen Kuppeln handelt es sich um ein Assistenzsystem für den Fahrer zur Unterstützung während des Rangierens.

Die Kupplungsmittel-Einfahrkontur umgibt den in rückwärtiger Richtung offenen, freien Bauraum im Kupplungskörper, welcher zum Ein- und Ausfahren sowie zum Festsetzen des anhängerseitigen Kupplungsmittels in seiner Endlage dient. Typischerweise umfasst die Kupplungsmittel-Einfahrkontur im Wesentlichen in Richtung der Hochachse verlaufende Wandstrukturen des Kupplungskörpers, welche während des Ankuppelns das anhängerseitige Kupplungsmittel fangen und bei fortwährender Rückwärtsfahrt des Zugfahrzeugs in Richtung des Verriegelungsmechanismus der Kupplungsvorrichtung seitlich führen.

Aufgrund der beweglichen Lagerung des Objekterkennungsmittels kann dieses in seiner Funktionsstellung in einem günstigen Bereich innerhalb oder nah zu der Längsachse des Zugfahrzeugs beziehungsweise der Kupplungsvorrichtung bis zu einem späten Zeitpunkt verbleiben, in welchem das anhängerseitige Kupplungsmittel bereits in den freien Bauraum des Kupplungskörpers eingetaucht und von der Kupplungsmittel-Einfahrkontur seitlich überlappt ist. Ein seitliches Fehlkuppeln des anhängerseitigen Kupplungsmittels ist zu diesem Zeitpunkt nicht mehr zu erwarten. Die bewegliche Lagerung sorgt dafür, dass das Objekterkennungsmittel aus der Bewegungsbahn des anhängerseitigen Kupplungsmittels entfernt ist und in die versenkte Ausweichposition gelangt. In der gegenüber der Kupplungsmittel-Einfahrkontur versenkten Ausweichposition überfährt das anhängerseitige Kupplungsmittel zerstörungsfrei das Objekterkennungsmittel.

Vorteilhafterweise ist das Objekterkennungsmittel in der versenkten Ausweichposition mindestens so weit zurückbewegt, dass das Objekterkennungsmittel mit dem benachbarten Abschnitt der Kupplungsmittel-Einfahrkontur abschließt. Das anhängerseitige Kupplungsmittel überfährt das Objekterkennungsmittel mit gleitendem Kontakt.

Es ist vorgesehen, dass das Objekterkennungsmittel längs einer Bewegungslinie beweglich gelagert ist.

Gemäß einer ersten bevorzugten Ausführungsform ist das Objekterkennungsmittel mittels eines Federelementes insbesondere entlang einer Wirkachse gelagert. Das Federelement hält das Objekterkennungsmittel federvorgespannt in der ausgeschobenen Funktionsstellung. Bei Kontakt mit dem anhängerseitigen Kupplungsmittel schiebt dieses das Objekterkennungsmittel gegen die Kraft des Federelementes in die zurückgeschobene Ausweichposition. Die zurückgeschobene Ausweichposition und die vorgeschobene Funktionsstellung liegen dann in der Wirkachse des Federelementes. Der wesentliche Vorteil dieser Ausführungsform liegt darin, dass keine weiteren Stellmotoren oder Aktuatoren notwendig sind.

Gemäß einer zweiten bevorzugten Ausführungsform kann das Objekterkennungsmittel ergänzend oder alternativ mittels eines Federelementes und/oder eines Hebels um eine oder mehrere Drehachse(n) gelagert sein. Bei dieser Ausführungsform initiiert auch hier das anhängerseitige Kupplungsmittel oder andere Bauteile des Anhängerfahrzeugs eine Bewegung des Objekterkennungsmittels zwischen seiner Funktionsstellung und eingezogenen Ausweichposition. Diese findet allerdings nicht unmittelbar durch einen Kontakt des anhängerseitigen Kupplungsmittels oder anderer Bauteile mit dem Objekterkennungsmittel, sondern durch Kontakt mit dem Hebel statt, welcher mit dem Objekterkennungsmittel eine kinematische Kette bildet. Der Vorteil bei dieser Ausführungsform besteht darin, dass das Objekterkennungsmittel aufgrund seiner fortlaufenden Belastung durch das Anhängerfahrzeug im Fahrbetrieb in der eingetauchten Ausweichposition verbleibt und dort geschützt gegen äußere Einflüsse untergebracht ist.

Gemäß einer dritten bevorzugten Ausführungsform ist das Objekterkennungsmittel mittels eines Aktuators verfahrbar. Hierbei verfährt der Aktuator berührungslos und mechanisch unabhängig von dem anhängerseitigen Kupplungsmittel oder anderen Bauteilen des Anhängerfahrzeugs das Objekterkennungsmittel. Insbesondere kann das Objekterkennungsmittel losgelöst davon, ob ein Anhängerfahrzeug angekuppelt ist oder nicht, bedarfsweise auch für weitere Aufgaben herangezogen werden, beispielsweise als Rangierhilfe beim Rückwärtsfahren.

Es hat sich als besonders günstig herausgestellt, wenn der Aktuator mit mindestens einem Näherungssensor verbunden ist. Der Näherungssensor veranlasst insbesondere ein automatisiertes Verfahren des Objekterkennungsmittels zwischen der Funktionsstellung und Ausweichposition in beiden Richtungen durch ein Inbetriebsetzen des Aktuators, ohne Zwischenschaltung einer Tätigkeit des Fahrers oder der Fahrerin.

Sinnvollerweise ist der Näherungssensor aus dem Objekterkennungsmittel gebildet. Das Objekterkennungsmittel dient ohnehin dazu, die Position des anhängerseitigen Kupplungsmittels zu erfassen und kann daher als Näherungssensor angesehen werden. Sofern das anhängerseitige Kupplungsmittel bildfüllend vor dem Objekterkennungsmittel angelangt ist, wird es Zeit, den Aktuator zu aktivieren und das Objekterkennungsmittel aus der Funktionsstellung in die Ausweichposition zu verbringen.

Die Sattelkupplungsplatte kann im Bereich der Endlage des Königszapfens einen den Königszapfen in Umfangsrichtung teilweise umschließenden, C-förmigen Lagerungsbereich aufweisen und die Kupplungsmittel-Einfahrkontur kann aus dem C-förmigen Lagerungsbereich gebildet sein. Der C-förmige, in rückwärtiger Richtung offene Lagerungsbereich ist häufig auch als auswechselbarer Verschleißring ausgebildet.

In jedem Fall begrenzt der C-förmige Lagerungsbereich den freien Bauraum in Fahrtrichtung der Sattelkupplungsplatte und bildet somit den in Fahrtrichtung vorderen Abschluss der Kupplungsmittel-Einfahrkontur. Das beweglich gelagerte Objekterkennungsmittel ist folglich in den C-förmigen Lagerungsbereich eingesetzt.

Ebenso kann die Sattelkupplungsplatte in rückwärtiger Richtung zwei eine Einfahröffnung begrenzende Kupplungshörner aufweisen und die Kupplungsmittel-Einfahrkontur kann aus einander zugewandten Flanken der Kupplungshörner gebildet sein. Das Objekterkennungsmittel ist bei dieser Ausgestaltung in eine Flanke von einem der beiden Kupplungshörner eingesetzt und ragt in der Funktionsstellung seitlich in die Einfahröffnung hinein. In der zurückgesetzten Ausweichposition wandert das Objekterkennungsmittel in das zugehörige Kupplungshorn und schließt vorzugsweise bündig mit der zugehörigen Flanke des Kupplungshorns ab.

Alternativ kann die Sattelkupplungsplatte in rückwärtiger Richtung eine unter einer Einfahröffnung angeordnete Querbrücke aufweisen und die Kupplungsmittel-Einfahrkontur kann aus der Querbrücke gebildet sein. Die Querbrücke erhöht die Festigkeit der Sattelkupplungsplatte und ist an beiden Seiten der Einfahröffnung kraftschlüssig mit der Unterseite der Sattelkupplungsplatte verbunden. Die Querbrücke bildet einen in der Hochachse unteren Abschluss des freien Bauraumes und begrenzt dadurch die Kupplungsmittel-Einfahrkontur nach unten. Bei dieser Ausgestaltung ist das Objekterkennungsmittel in die Querbrücke eingesetzt. Die Querbrücke kann auch lediglich an einer Seite mit der Sattelkupplungsplatte verbunden sein und als Halter für das Objekterkennungsmittel dienen.

Eine weitere Alternative besteht darin, dass die Sattelkupplungsplatte in rückwärtiger Richtung eine Steckerkonsole eines Leitungskupplungssystems aufweist und die Kupplungsmittel-Einfahrkontur aus der Steckerkonsole gebildet ist.

Die Steckerkonsole verbindet sich typischerweise selbsttätig mit einem komplementären Stecker des Anhängerfahrzeugs während des Ankuppelvorgangs. Auch die Steckerkonsole begrenzt den freien Bauraum des Kupplungskörpers in der Hochachse nach unten und setzt die untere Kupplungsmittel-Einfahrkontur in rückwärtiger Richtung fort, damit ein sich annähernder Königszapfen ungehindert die Steckerkonsole während des Ankuppelns überfahren kann. Das beweglich gelagerte Objekterkennungsmittel ist bei dieser Ausgestaltung in oder an der Steckerkonsole befestigt.

Zweckmäßigerweise ist das Objekterkennungsmittel bezüglich der Kupplungsvorrichtung um eine quer zur Längsachse ausgerichteten Querachse schwenkbar gelagert. Insbesondere bei einer digitalen Bilderkennung kann ein anhängerseitiges Kupplungsmittel erkannt und das Objekterkennungsmittel auf das Kupplungsmittel gerichtet werden. Hierfür ist das Objekterkennungsmittel um die Querachse rotierend gelagert und vorzugsweise mittels eines Stellmotors aktiv um diese Querachse positioniert.

Zum besseren Verständnis wird die Erfindung nachfolgend anhand von 9 Figuren näher erläutert. Dabei zeigen die
- **FIG. 1:**: eine Rückansicht und Draufsicht auf einen Kupplungskörper mit möglichen Einbaupositionen des Objekterkennungsmittels;
- **FIG. 2:**: einen Längsschnitt durch einen Kupplungskörper mit im Lagerungsbereich einer Sattelkupplungsplatte angeordnetem Objekterkennungsmittel in Funktionsstellung;
- **FIG. 3:**: eine Draufsicht auf einen Kupplungskörper mit in einem der Kupplungshörner der Sattelkupplungsplatte angeordnetem Objekterkennungsmittel in Funktionsstellung;
- **FIG. 4:**: eine Draufsicht gemäß FIG. 3 mit Objekterkennungsmittel in Ausweichposition;
- **FIG. 5:**: einen Längsschnitt durch eine Querbrücke der Sattelkupplungsplatte mit in der Querbrücke angeordnetem Objekterkennungsmittel in Funktionsstellung;
- **FIG. 6:**: einen Längsschnitt gemäß FIG. 5 mit angenähertem Königszapfen und Objekterkennungsmittel zwischen Funktionsstellung und Ausweichposition;
- **FIG. 7:**: einen Längsschnitt durch einen Kupplungskörper mit in einer Steckerkonsole eines Leitungskupplungssystems angeordnetem Objekterkennungsmittel in Funktionsstellung;
- **FIG. 8:**: einen Längsschnitt durch einen Kupplungskörper mit in einer Querbrücke der Sattelkupplungsplatte angeordnetem Objekterkennungsmittel gemäß einer zweiten, alternativen Ausführungsform und
- **FIG. 9:**: einen Längsschnitt durch einen Kupplungskörper mit in einer Querbrücke der Sattelkupplungsplatte angeordnetem Objekterkennungsmittel gemäß einer dritten, alternativen Ausführungsform.

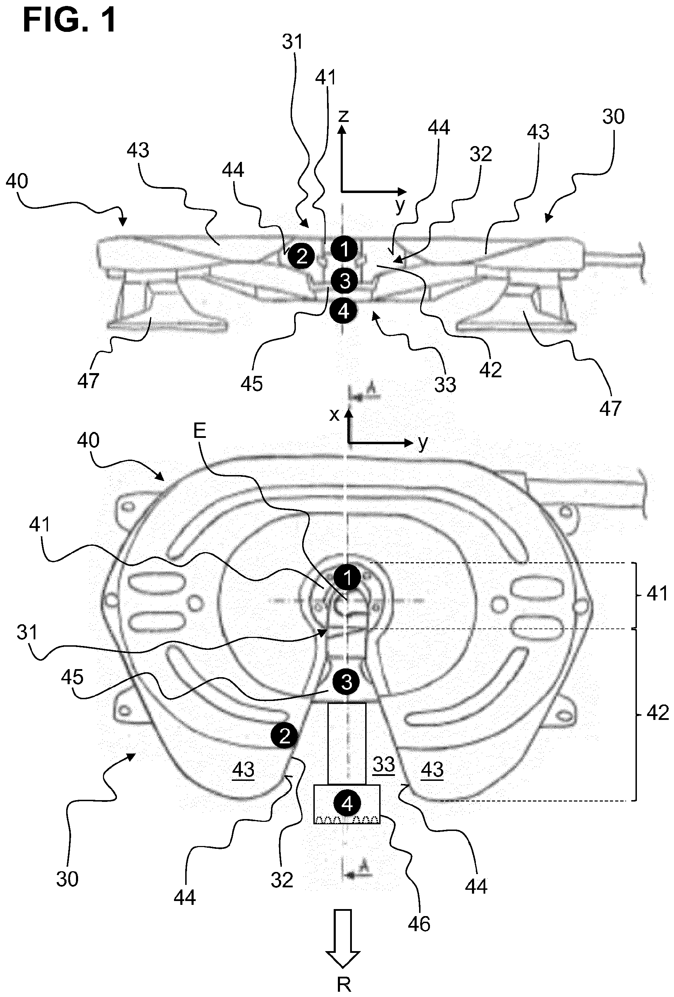

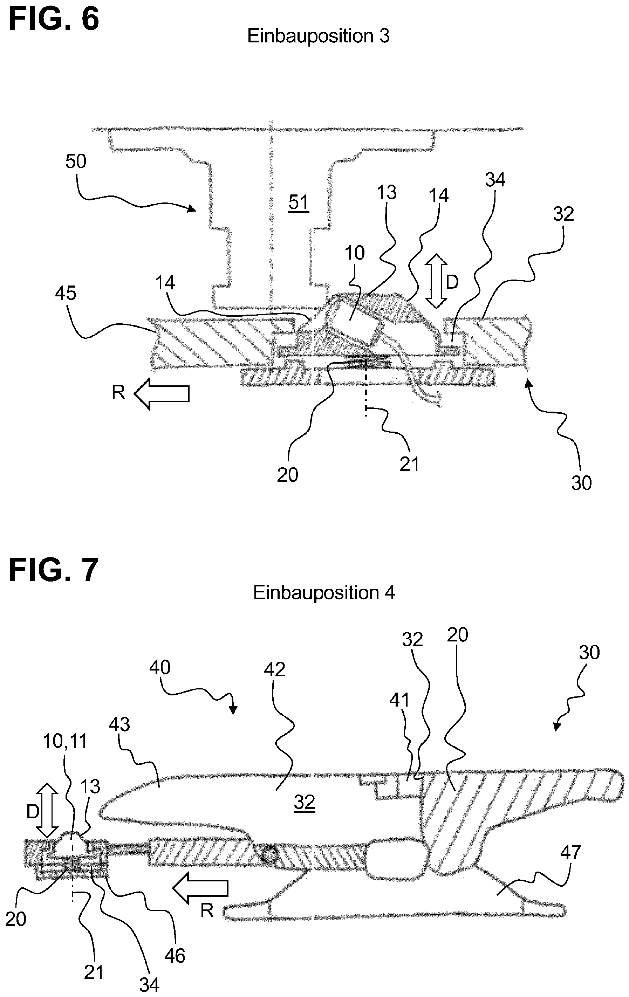

Die FIG. 1 zeigt eine Rückansicht und eine Draufsicht auf eine typischerweise auf einem nicht dargestellten Zugfahrzeug montierten Kupplungskörper 30, in welchen sich ein Kupplungsmittel 50 (siehe FIG. 6) eines Anhängerfahrzeugs einfahren und mittels eines Verriegelungsmechanismus 31 schwenkbeweglich festlegen lässt. In dem vorliegenden Ausführungsbeispiel ist der zugfahrzeugseitige Kupplungskörper 30 als Sattelkupplungsplatte 40 und das anhängerseitige Kupplungsmittel 50 als Königszapfen 51 ausgebildet. In montiertem Zustand ist die Sattelkupplungsplatte 40 mittels von zwei in einer Querachse y gegenüberliegenden Lagerböcken 47 an dem Zugfahrzeug befestigt.

Vor einem Ankuppeln des Königszapfens 51 befindet sich dieser in rückwärtiger Richtung R zu der Sattelkupplungsplatte 40, welche auf der dem Königszapfen 51 zugewandten Seite eine sich in distaler Richtung konisch aufgeweitete Einfahröffnung 42 aufweist. Die Einfahröffnung 42 ist von zwei beidseitig der Einfahröffnung 42 angeordneten Kupplungshörnern 43 begrenzt, welche wiederum einstückig integraler Bestandteil der Sattelkupplungsplatte 40 sind.

An ihrem proximalen Ende geht die Einfahröffnung 42 in einen zentral in der Sattelkupplungsplatte 40 angeordneten Lagerungsbereich 41 über. In dem Lagerungsbereich 41 erreicht der Königszapfen 51 seine Endlage E für den Fahrbetrieb und ist dort von dem in den Lagerungsbereich 41 hinein- und hinausschwenkbaren Verriegelungsmechanismus 31 lösbar gehalten.

Der Lagerungsbereich 41 und die Einfahröffnung 42 bilden einen zusammenhängenden und ineinander übergehenden, freien Bauraum 33, welcher in einer Erstreckung in Richtung einer Querachse y und einer Hochachse z der Sattelkupplungsplatte 40 stets größer dimensioniert ist als der zum Eintritt in die Sattelkupplungsplatte 40 vorgesehene Königszapfen 51.

Der freie Bauraum 33 wird in einem Abschnitt der Einfahröffnung 42 seitlich von senkrecht stehenden Flanken 44 der Kupplungshörner 43 begrenzt, wobei sich die Flanken 44 auch im Lagerungsbereich 41 entsprechend einer Dicke der Sattelkupplungsplatte 40 fortsetzen. Der freie Bauraum 33 ist in der Hochachse z nach oben durch die Oberseite der Sattelkupplungsplatte 40 und nach unten, in einem Übergangsbereich von der Einfahröffnung 42 und dem Lagerungsbereich 41, durch eine Querbrücke 45 begrenzt. Die Querbrücke 45 verläuft unter der Einfahröffnung 42 beziehungsweise dem Lagerungsbereich 41 hinweg und wird während des An- und Abkuppelns von dem Königszapfen 51 überfahren.

An der Sattelkupplungsplatte 40 kann außerdem eine Steckerkonsole 46 eines Leitungskupplungssystems zum automatisierten Verbinden und Lösen der Versorgungsleitungen während des mechanischen An- oder Abkuppelvorgangs von Zugfahrzeug und Anhängerfahrzeug befestigt sein. Die Steckerkonsole 46 ist ganz oder teilweise in der Einfahröffnung 42 oder in rückwärtiger Richtung versetzt zu der Einfahröffnung 42 gehalten. In der Hochachse z kann die Steckerkonsole 46 von dem Königszapfen 51 berührungsfrei überfahren werden.

Um räumliche Verzerrungen des von einem Objekterkennungsmittel 10 bereitgestellten Bildes zu minimieren und rechnerisch möglichst gar nicht oder lediglich geringstmöglich bearbeiten zu müssen, sollte das Objekterkennungsmittel 10 möglichst an dem Kupplungsköper 30 angeordnet sein, insbesondere an der Sattelkupplungsplatte 40, und außerdem in dessen Längsachse x oder möglichst nah zu der Längsachse x.

Geeignet sind die in FIG. 1 markierten Einbaupositionen für das Objekterkennungsmittel 10 in einer Einbauposition 1 des Lagerungsbereichs 41, einer Einbauposition 2 an der Einfahröffnung 42, einer Einbauposition 3 an der Querbrücke 45 und einer Einbauposition 4 an der Steckerkonsole 46. Alle Einbaupositionen 1, 2, 3, 4 liegen im Einwirkungsbereich eines ein- und ausfahrenden Königszapfens 51, der ein statisch in den freien Bauraum 33 hineinragendes Objekterkennungsmittel 10 bei einer Kollision zerstören würde.

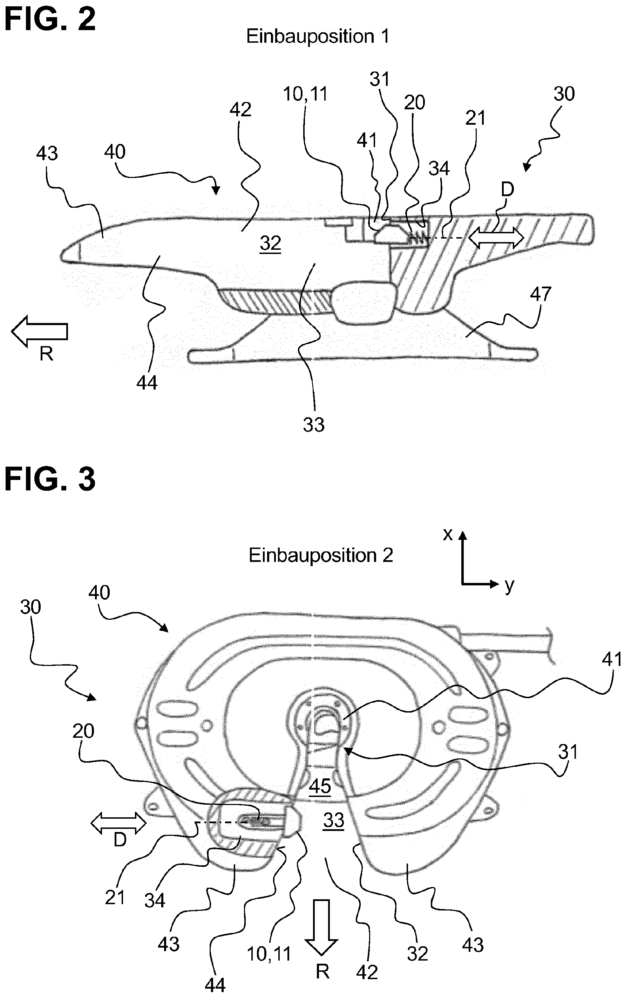

Die FIG. 2 stellt eine erste Einbauposition 1 dar, bei welcher das Objekterkennungsmittel 10 beweglich im Lagerungsbereich 41 befestigt ist. Der Lagerungsbereich 41 bildet dabei eine benachbarte Kupplungsmittel-Einfahrkontur 32. In dem Kupplungskörper 30, bei der gezeigten Ausführungsform gemäß FIG. 2 im Lagerungsbereich 41 der Sattelkupplungsplatte 40, ist eine komplementär zu dem Objekterkennungsmittel 10 geformte Aufnahmeöffnung 34 eingebracht, die derart dimensioniert ist, dass das Objekterkennungsmittel 10 vollständig in die Aufnahmeöffnung 34 eintauchen kann.

Vor dem Ankuppeln und während einer Annäherung des Königszapfens 51 ist das Objekterkennungsmittel 10 mittels eines Federelementes 20 in einer in den freien Bauraum 33 hineinragende Funktionsstellung 11 gehalten. Erst mit Auftreffen des Königszapfens 51 auf das Objekterkennungsmittel 10 wird dieses in einer Wirkachse 21 gegen die Vorspannung des Federelementes 20 und in die Aufnahmeöffnung 34 zurückgedrückt.

Bei einer Ausrichtung des Objekterkennungsmittels 10 in rückwärtiger Richtung R der Längsachse x, ist auch die Wirkachse 21 des Federelementes 20 in der Längsachse x ausgerichtet. In diesem Fall stimmt die Richtung des einfahrenden Königszapfens 51 mit der Wirkachse 21 des Federelementes 20 überein.

Im Fall einer in Umfangsrichtung des Lagerungsbereiches 41 versetzten Ausrichtung des Objekterkennungsmittels 10, kann auch die Wirkachse 21 des Federelementes 20 radial versetzt sein und fluchtet dann nicht mehr mit der Richtung des einfahrenden Königszapfens 51. Aufgrund der großen Kraft des annähernden Königszapfens 51 ist dann ein anteiliger, in Richtung der Wirkachse 21 gerichteter Kraftvektor ausreichend, um das Objekterkennungsmittel 10 in seine Aufnahmeöffnung 34 zurückzuschieben.

Die FIG. 3 betrifft ein alternatives Ausführungsbeispiel, bei dem das Objekterkennungsmittel10 gemäß der Einbauposition 2 in einer der beiden seitlichen Flanken 44 der Kupplungshörner 43 untergebracht ist. Die Wirkachse 21 des Federelementes 20 sowie die axiale Erstreckung der Aufnahmeöffnung 34 sind in der Querachse y ausgerichtet. In der Funktionsstellung 11 ragt das Objekterkennungsmittel 10 federvorgespannt bezüglich der aus der zugehörigen Flanke 44 gebildeten Kupplungsmittel-Einfahrkontur 32 hervor und steht in die Einfahröffnung 42 hinein. Die Funktionsstellung 11 ermöglicht eine Erkennung des anhängerseitigen Kupplungsmittels 50, beispielsweise des Königszapfens 51.

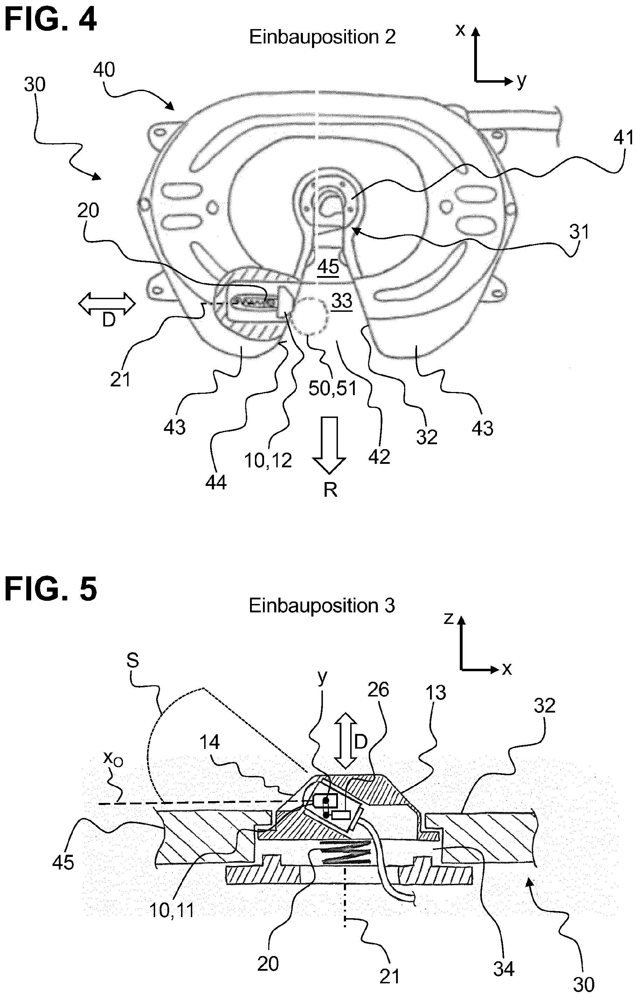

Die FIG. 4 verdeutlicht die Situation der Einbauposition 2 bei einer Kollision des Königszapfens 51 mit dem Objekterkennungsmittel 10, durch welche eine anteilige Kraft in der Querachse y auf das Objekterkennungsmittel 10 übertragen und dieses innerhalb der Aufnahmeöffnung 34 in einer Bewegungsrichtung D bis in eine Ausweichposition 12 zurückgedrückt wird, so dass der Königszapfen 51 den ansonsten freien Bauraum 33 in der Einfahröffnung 42 passieren kann. Das Objekterkennungsmittel 10 ist in der Ausweichposition 12 so weit bezüglich der benachbarten Flanke 44 eingeschoben, dass keine Teile mehr vorstehen und der Königszapfen 51 von der Flanke 44 geführt in Richtung des Lagerungsbereiches 41 wandert.

In der FIG. 5 ist eine weitere Einbauposition 3 beschrieben, bei welcher das Objekterkennungsmittel 10 in der Querbrücke 45 untergebracht ist und in der Hochachse z nach unten wegtaucht. Die Querbrücke 45 bildet die untere Kupplungsmittel-Einfahrkontur 32. Das Objekterkennungsmittel 10 ist hierfür mittels des Federelementes 20 in der Aufnahmeöffnung 34 beweglich gelagert und wird, sofern ein Königszapfen 51 aus einem Annäherungssektor S herankommt, von diesem in der Bewegungsrichtung D entsprechend der Wirkachse 21 des Federelementes 20 in Richtung der Hochachse z nach unten aus dem Weg gedrückt.

Das Objekterkennungsmittel 10 weist ein Gehäuse 13 auf, in welchem auch ein Stellmotor 26 untergebracht ist. Der Stellmotor 26 richtet das Objekterkennungsmittel 10 aktiv um die Querachse y so aus, dass die optische Achse x_{O} des Objekterkennungsmittels 10 nach hinten, das heißt parallel zu der gegebenen Geländeoberkante, zeigt.

Die FIG. 6 zeigt dieselbe Einbauposition 3 wie FIG. 5 unmittelbar während einer Kontaktierung des Objekterkennungsmittels 10 mit einem herannahenden Königszapfen 51. In der vergrößerten Darstellung der FIG. 6 ist besonders gut das Gehäuse 13 zu erkennen, an dessen bezüglich der Kupplungsmittel-Einfahrkontur 32 vorstehenden Abschnitt eine Pilzkopfform mit zwei schräg zur Längsachse x stehenden Gehäusestoßflächen 14 ausgeformt ist.

Der einfahrende Königszapfen 51 kollidiert zunächst mit der in der Bildebene links, in rückwärtiger Richtung R liegenden Gehäusestoßfläche 14 und schiebt dadurch das Objekterkennungsmittel 10 in Richtung seiner Ausweichposition 12 in die Aufnahmeöffnung 34 hinein. Während eines Überfahrens des Gehäuses 13 wird dieses aufgrund der Rückstellkraft des Federelementes 20 weiterhin solange gegen den Königszapfen 51 gedrückt, bis dieser aus dem Wirkkontakt gewichen ist.

Nach einem mechanischen Öffnen des Verriegelungsmechanismus 31 werden das Zugfahrzeug und das Anhängerfahrzeug voneinander getrennt. Dabei wandert der Königszapfen 51 in rückwärtiger Richtung R und trifft diesmal zunächst auf die in der Bildebene rechts liegende Gehäusestoßfläche 14 und schiebt sodann das Gehäuse 13 des Objekterkennungsmittels 10 nach unten in die Aufnahmeöffnung 34.

In der FIG. 7 ist eine Einbauposition 4 abgebildet, bei welcher das Objekterkennungsmittel 10 in der von der Steckerkonsole 46 begrenzten Kupplungsmittel-Einfahrkontur 32 beweglich gelagert ist. In der Steckerkonsole 46 ist eine sich mit seiner axialen Erstreckung in der Hochachse z ausgerichteten Aufnahmeöffnung 34 ausgeformt, in welche das Objekterkennungsmittel 10 mit seinem Federelement 20 in Wirkachse 21 beweglich eingesetzt ist. Die Bewegungsrichtung D des Objekterkennungsmittels 10 entspricht der Hochachse z. Bei einer Annäherung des Königszapfens 51 trifft dieser als erstes auf die Steckerkonsole 46, die in rückwärtiger Richtung unter der Einfahröffnung 42 angeordnet ist und schiebt das Objekterkennungsmittel 10 vorübergehend gegen den Widerstand des Federelementes 20 in die Steckerkonsole 46 hinein, so dass die volle Tiefe der Einfahröffnung 42 zum weiteren Ankuppeln des Königszapfens 51 zur Verfügung steht.

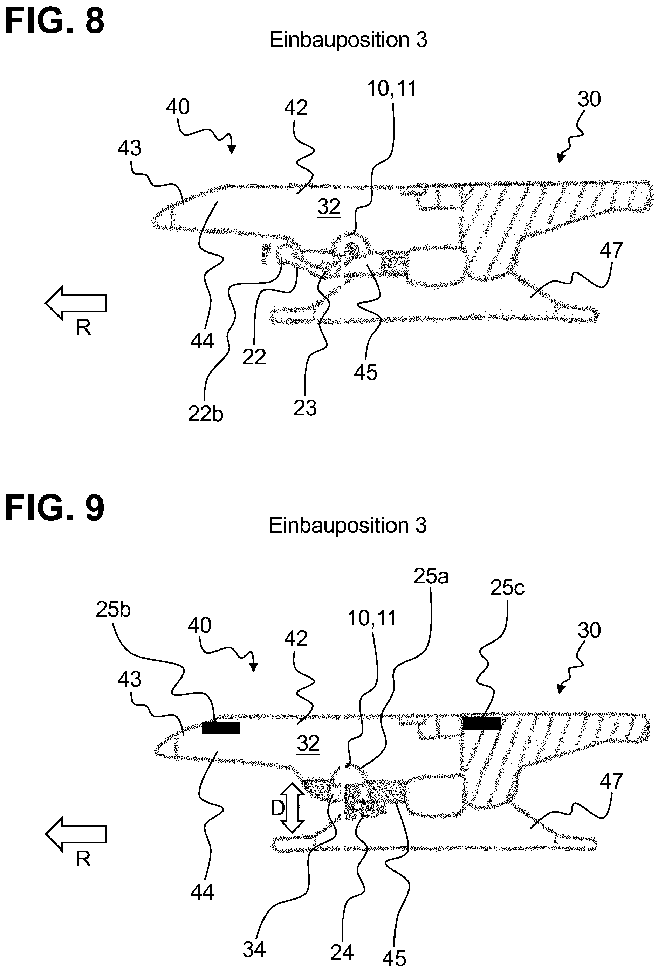

Die FIG. 8 zeigt eine andere Ausgestaltung, bei welcher ein sich annähernder Königszapfen 51 nicht unmittelbar mit dem Objekterkennungsmittel 10 oder dessen Gehäuse 13 in Verbindung tritt, sondern mit einem bügelförmigen Hebel 22, dessen eines Ende schwenkbar mit dem Objekterkennungsmittel 10 verbunden und dessen gegenüberliegendes, zweites Ende mit einer Kontaktwulst 22b ausgebildet ist. Der Hebel 22 ist zwischen seinem ersten und zweiten Ende mittig mittels einer Drehachse 23 ebenfalls schwenkbeweglich um die Querachse y gelagert.

Während des Ankuppelns stößt der Königszapfen 51 zunächst gegen die Kontaktwulst 22b und verschwenkt diese im Uhrzeigersinn um die Drehachse 23, wodurch das Objekterkennungsmittel 10 aus seiner anfänglichen Funktionsstellung 11 im selben Richtungssinn zurückgezogen und in die abgesenkte Ausweichposition 12 wandert.

Die FIG. 9 stellt eine andere Ausführungsform dar, bei welcher unmittelbar keine Kontaktierung zwischen Teilen des Objekterkennungsmittels 10 und dem Königszapfen 51 stattfindet. Bei dieser Ausführungsform ist das Objekterkennungsmittel 10 mit einem Aktuator 24 gekoppelt, welcher das Objekterkennungsmittel 10 bei Annäherung eines Königszapfens 51 aus der Funktionsstellung 11 in die Aufnahmeöffnung 34 bis zum Erreichen der Ausweichposition 12 zurückzieht. Der Aktuator 24 ist mit mindestens einem Näherungssensor 25a, 25b, 25c verbunden, welcher bei Unterschreiten eines Mindestabstandes dem Aktuator 24 ein entsprechendes Signal bereitstellt. Als Näherungssensor 25a kann das Objekterkennungsmittel 10 selbst dienen, welches ohnehin den Königszapfen 51 identifiziert und in Anhängigkeit der sichtbaren Größe einen Abstandswert generieren kann. Alternativ oder ergänzend ist es möglich, mindestens einen Näherungssensor 25b an einem in rückwärtiger Richtung R liegenden Ende des Kupplungshorns 43 oder beider Kupplungshörnern 43 vorzusehen. Alternativ oder ergänzend sollte auch ein Näherungssensor 25c im Bereich des Lagerungsbereiches 41 angeordnet sein. Dieser erkennt eine Vergrößerung des Abstandes zwischen dem Näherungssensor 25c und dem Königszapfen 51, was besonders beim Abkuppeln wichtig ist, um ein gegebenenfalls in der Funktionsstellung 11 ausgerichtetes Objekterkennungsmittel 10 rechtzeitig mittels des Aktuators 24 in die Ausweichposition 12 zurückzufahren.

### BEZUGSZEICHENLISTE

- 1: Einbauposition Lagerungsbereich
- 2: Einbauposition Einfahröffnung
- 3: Einbauposition Querbrücke
- 4: Einbauposition Steckerkonsole

- 10: Objekterkennungsmittel
- 11: Funktionsstellung
- 12: Ausweichposition
- 13: Gehäuse Objekterkennungsmittel
- 14: Gehäusestoßfläche

- 20: Federelement
- 21: Wirkachse Federelement
- 22: Hebel
- 22b: Kontaktwulst
- 23: Drehachse Hebel/Federelement
- 24: Aktuator
- 25a-c: Näherungssensor
- 26: Stellmotor

- 30: Kupplungskörper
- 31: Verriegelungsmechanismus
- 32: Kupplungsmittel-Einfahrkontur
- 33: freier Bauraum
- 34: Aufnahmeöffnung Objekterkennungsmittel

- 40: Sattelkupplungsplatte
- 41: Lagerungsbereich
- 42: Einfahröffnung
- 43: Kupplungshorn
- 44: Flanke Kupplungshorn
- 45: Querbrücke
- 46: Steckerkonsole Leitungskupplungssystem
- 47: Lagerbock

- 50: Kupplungsmittel Anhängerfahrzeug
- 51: Königszapfen

- D: Bewegungsrichtung Objekterkennungsmittel
- E: Endlage
- R: rückwärtige Richtung
- S: Annäherungssektor Kupplungsmittel

- x: Längsachse
- x_{O}: optische Achse Objekterkennungsmittel
- y: Querachse
- z: Hochachse

## Patentansprüche

1. Kupplungsvorrichtung für ein Zugfahrzeug mit einem an der Kupplungsvorrichtung angebrachten Objekterkennungsmittel (10), wobei die Kupplungsvorrichtung einen Kupplungskörper (30) in Form einer Sattelkupplungsplatte (40) und einen Verrieglungsmechanismus (31) aufweist, mit welchem ein an einem Anhängerfahrzeug angeordnetes Kupplungsmittel (50) in Form eines Königszapfens (51) in seiner Endlage (E) lösbar an dem Kupplungskörper (30) gehalten ist, und der Kupplungskörper (30) einen von einer Kupplungsmittel-Einfahrkontur (32) begrenzten, sich in einer Längsachse (x) erstreckenden, freien Bauraum (33) aufweist, in den das Kupplungsmittel (50) während des Ankuppelns bis zum Erreichen seiner Endlage (E) zumindest teilweise eingetaucht ist,
**dadurch gekennzeichnet,**
**dass** das Objekterkennungsmittel (10) eine Kamera (10) ist und die Kamera (10) in der Kupplungsmittel-Einfahrkontur (32) beweglich zwischen einer in den freien Bauraum (33) hineinragenden Funktionsstellung (11) und einer in der Kupplungsmittel-Einfahrkontur (32) versenkten Ausweichposition (12) gelagert ist.

2. Kupplungsvorrichtung nach Anspruch 1, **dadurch gekennzeichnet, dass** das Objekterkennungsmittel (10) in der versenkten Ausweichposition (12) mindestens so weit zurückbewegt ist, dass das Objekterkennungsmittel (10) mit dem benachbarten Abschnitt der Kupplungsmittel-Einfahrkontur (32) abschließt.

3. Kupplungsvorrichtung nach Anspruch 1 oder 2, **dadurch gekennzeichnet, dass** das Objekterkennungsmittel (10) mittels eines Federelementes (20) entlang einer Wirkachse (21) gelagert ist.

4. Kupplungsvorrichtung nach einem der Ansprüche 1 bis 3, **dadurch gekennzeichnet, dass** das Objekterkennungsmittel (10) mittels eines Federelementes (20) und/oder eines Hebels (22) um eine oder mehrere Drehachse(n) (23) gelagert ist.

5. Kupplungsvorrichtung nach Anspruch 1 oder 2, **dadurch gekennzeichnet, dass** das Objekterkennungsmittel (10) mittels eines Aktuators (24) verfahrbar ist.

6. Kupplungsvorrichtung nach Anspruch 5, **dadurch gekennzeichnet, dass** der Aktuator (24) mit mindestens einem Näherungssensor (25) verbunden ist.

7. Kupplungsvorrichtung nach Anspruch 6, **dadurch gekennzeichnet, dass** der Näherungssensor (25) aus dem Objekterkennungsmittel (10) gebildet ist.

8. Kupplungsvorrichtung nach einem der Ansprüche 1 bis 7, **dadurch gekennzeichnet, dass** die Sattelkupplungsplatte (40) im Bereich der Endlage (E) des Königszapfens (51) einen den Königszapfen (51) in Umfangsrichtung teilweise umschließenden C-förmigen Lagerungsbereich (41) aufweist und die Kupplungsmittel-Einfahrkontur (32) aus dem C-förmigen Lagerungsbereich (41) gebildet ist.

9. Kupplungsvorrichtung nach einem der Ansprüche 1 bis 7, **dadurch gekennzeichnet, dass** die Sattelkupplungsplatte (40) in rückwärtiger Richtung (R) zwei eine Einfahröffnung (42) begrenzende Kupplungshörner (43) aufweist und die Kupplungsmittel-Einfahrkontur (32) aus einander zugewandten Flanken (44) der Kupplungshörner (43) gebildet ist.

10. Kupplungsvorrichtung nach einem der Ansprüche 1 bis 7, **dadurch gekennzeichnet, dass** die Sattelkupplungsplatte (40) in rückwärtiger Richtung (R) eine unter einer Einfahröffnung (42) angeordnete Querbrücke (45) aufweist und die Kupplungsmittel-Einfahrkontur (32) aus der Querbrücke (45) gebildet ist.

11. Kupplungsvorrichtung nach einem der Ansprüche 1 bis 7, **dadurch gekennzeichnet, dass** die Sattelkupplungsplatte (40) in rückwärtiger Richtung (R) eine Steckerkonsole (46) eines Leitungskupplungssystems aufweist und die Kupplungsmittel-Einfahrkontur (32) aus der Steckerkonsole (46) gebildet ist.

12. Kupplungsvorrichtung nach einem der Ansprüche 1 bis 11, **dadurch gekennzeichnet, dass** das Objekterkennungsmittel (10) bezüglich der Kupplungsvorrichtung um eine quer zur Längsachse (x) ausgerichteten Querachse (y) schwenkbar gelagert ist.

13. Kupplungsvorrichtung nach Anspruch 12, **dadurch gekennzeichnet, dass** das Objekterkennungsmittel (10) mittels eines Stellmotors (26) aktiv um die Querachse (y) positionierbar ist.

## Claims

1. A coupling device for a towing vehicle with an object detection means (10) attached to the coupling device, wherein the coupling device has a coupling body (30) in form of a fifth wheel plate (40) and a locking mechanism (31), with which a coupling means (50) in form of a kingpin (51) is releasably held on the coupling body (30) in its end position (E), wherein the coupling body (30) comprises an available space (33) which is limited by a coupling means guiding contour (32) and extends along a longitudinal axis (x), wherein the coupling means (50) is at least partially immersed during coupling into the available space (33) until reaching an end position (E),
**characterized in that**
the object detection means (10) is a camera (10) and the camera (10) is mounted in the coupling means guiding contour (32) so that it can move between a functional position (11) protruding into the available space (33) and a dodged position (12) sunk into the coupling means guiding contour (32).

2. The coupling device according to claim 1, **characterized in that** in the lowered dodged position (12) the object detection means (10) is moved back at least so far that the object detection means (10) terminates with the adjacent section of the coupling means guiding contour (32).

3. The coupling device according to claim 1 or 2, **characterized in that** the object detection means (10) is mounted by means of a spring element (20) along an active axis (21).

4. The coupling device according to one of claims 1 to 3, **characterized in that** the object detection means (10) is mounted by means of a spring element (20) and/or a lever (22) about one or more axis of rotation(s) (23).

5. The coupling device according to claim 1 or 2, **characterized in that** the object detection means (10) can be moved by means of an actuator (24).

6. The coupling device according to claim 5, **characterized in that** the actuator (24) is connected to at least one proximity sensor (25a, 25b, 25c).

7. The coupling device according to claim 6, **characterized in that** the proximity sensor (25a, 25b, 25c) is formed from the object detection means (10).

8. The coupling device according to one of claims 1 to 7, **characterized in that** the fifth wheel plate (40) in the region of the end position (E) of the kingpin (51) comprises a C-shaped bearing area (41) which is partially enclosing the kingpin (51) in the circumferential direction, wherein the coupling means guiding contour (32) is formed from the C-shaped bearing area (41).

9. The coupling device according to one of claims 1 to 7, **characterized in that** the fifth wheel plate (40) comprises two coupling horns (43) delimiting an entrance opening (42) in the rearward direction (R), wherein the coupling means guiding contour (32) is formed from flanks (44) of the coupling horns (43) which are facing one another.

10. The coupling device according to one of claims 1 to 7, **characterized in that** the fifth wheel plate (40) has a cross bridge (45) arranged under an entrance opening (42) in the rearward direction (R), wherein the coupling means guiding contour (32) is formed from the transverse bridge (45).

11. The coupling device according to one of claims 1 to 7, **characterized in that** the fifth wheel plate (40) in the rearward direction (R) has a connector console (46) of a line coupling system, wherein the coupling means guiding contour (32) is formed from the connector console (46).

12. The coupling device according to one of claims 1 to 11, **characterized in that** the object detection means (10) is mounted pivotably with respect to the coupling device about a transverse axis (y) oriented transversely to the longitudinal axis (x).

13. The coupling device according to claim 12, **characterized in that** the object detection means (10) can be actively positioned about the transverse axis (y) by means of a servomotor (26).

## Revendications

1. Dispositif d'accouplement pour un véhicule tracteur avec un moyen de reconnaissance d'objet fixé à celui-ci (10), dans lequel le dispositif d'accouplement présente un corps d'accouplement (30) sous la forme d'une plaque de sellette d'attelage (40) et un mécanisme de verrouillage (31), au moyen duquel un moyen d'accouplement (50) disposé sur un véhicule remorque sous la forme d'un pivot d'attelage (51) est maintenu de manière détachable sur le corps d'accouplement (30) dans sa position finale (E), et le corps d'accouplement (30) présente un espace libre (33) délimité par un contour d'introduction du moyen d'accouplement (32) et s'étendant selon un axe longitudinal (x), espace dans lequel le moyen d'accouplement (50) est engagé au moins partiellement lors de l'opération d'accouplement jusqu'à l'atteinte de sa position finale (E),
**caractérisé en ce**
**que** le moyen de reconnaissance d'objet (10) est une caméra (10) et que la caméra (10) est montée de manière mobile dans le contour d'introduction du moyen d'accouplement (32) entre une position fonctionnelle (11) faisant saillie dans l'espace libre (33) et une position escamotée (12) enfoncée dans le contour d'introduction du moyen d'accouplement (32).

2. Dispositif d'accouplement selon la revendication **1, caractérisé en ce que** le moyen de reconnaissance d'objet (10), dans la position escamotée (12), est déplacé vers l'arrière au moins dans une mesure telle que le moyen de reconnaissance d'objet (10) affleure la section adjacente du contour d'introduction du moyen d'accouplement (32).

3. Dispositif d'accouplement selon la revendication 1 ou 2, **caractérisé en ce que** le moyen de reconnaissance d'objet (10) est monté au moyen d'un élément ressort (20) le long d'un axe d'action (21).

4. Dispositif d'accouplement selon l'une quelconque des revendications 1 à 3, **caractérisé en ce que** le moyen de reconnaissance d'objet (10) est monté au moyen d'un élément ressort (20) et/ou d'un levier (22) autour d'un ou de plusieurs axe(s) de rotation (23).

5. Dispositif d'accouplement selon la revendication 1 ou 2, **caractérisé en ce que** le moyen de reconnaissance d'objet (10) est déplaçable au moyen d'un actionneur (24).

6. Dispositif d'accouplement selon la revendication 5, **caractérisé en ce que** l'actionneur (24) est relié à au moins un capteur de proximité (25).

7. Dispositif d'accouplement selon la revendication 6, **caractérisé en ce que** le capteur de proximité (25) est constitué par le moyen de reconnaissance d'objet (10).

8. Dispositif d'accouplement selon l'une quelconque des revendications 1 à 7, **caractérisé en ce que** la plaque de sellette d'attelage (40) présente, dans la zone de la position finale (E) du pivot d'attelage (51), une zone de logement en forme de C (41) entourant partiellement le pivot d'attelage (51) dans le sens circonférentiel, et **en ce que** le contour d'introduction du moyen d'accouplement (32) est formé par la zone de logement en forme de C (41).

9. Dispositif d'accouplement selon l'une quelconque des revendications 1 à 7, **caractérisé en ce que** la plaque de sellette d'attelage (40) présente, vers l'arrière (R), deux oreilles d'accouplement (43) délimitant une ouverture d'introduction (42), et **en ce que** le contour d'introduction du moyen d'accouplement (32) est formé par les flancs (44) des oreilles d'accouplement (43) orientés l'un vers l'autre.

10. Dispositif d'accouplement selon l'une quelconque des revendications 1 à 7, **caractérisé en ce que** la plaque de sellette d'attelage (40) présente, vers l'arrière (R), un pont transversal (45) disposé sous une ouverture d'introduction (42), et **en ce que** le contour d'introduction du moyen d'accouplement (32) est formé par le pont transversal (45).

11. Dispositif d'accouplement selon l'une quelconque des revendications 1 à 7, **caractérisé en ce que** la plaque de sellette d'attelage (40) présente, vers l'arrière (R), une console de connecteur (46) d'un système de raccordement de câbles, et **en ce que** le contour d'introduction du moyen d'accouplement (32) est formé par la console de connecteur (46).

12. Dispositif d'accouplement selon l'une quelconque des revendications 1 à 11, **caractérisé en ce que** le moyen de reconnaissance d'objet (10) est monté de manière pivotante par rapport au dispositif d'accouplement autour d'un axe transversal (y) orienté perpendiculairement à l'axe longitudinal (x).

13. Dispositif d'accouplement selon la revendication 12, **caractérisé en ce que** le moyen de reconnaissance d'objet (10) peut être activement positionné autour de l'axe transversal (y) au moyen d'un moteur de réglage (26).
